# EUROPEAN PATENT SPECIFICATION

(11) **EP 2 552 534 B1**
(45) Date of publication and mention of the grant of the patent: **24.09.2014**
(21) Application number: 11716823.7
(22) Date of filing: 01.04.2011
(51) Int. Cl.: G01N 1/20, B01L 3/00, A61M 39/02

(54) **FLEXIBLE BAG FOR LIQUID, PARTICULARLY A URINE OR BLOOD BAG, CONTAINING A SAMPLING DEVICE**
FLEXIBLER BEUTEL FÜR FLÜSSIGKEITEN, IM BESONDEREN EIN HARN- ODER BLUTBEUTEL MIT EINER PROBENAHMEVORRICHTUNG
POCHE SOUPLE POUR LIQUIDE, EN PARTICULIER POCHE À URINE OU À SANG, COMPORTANT UN DISPOSITIF DE PRÉLÈVEMENT

(30) Priority: 01.04.2010 FR 1001376
(43) Date of publication of application: 06.02.2013
(73) Proprietor: B. Braun Medical SAS, 92107 Boulogne-Billancourt Cedex (FR)
(72) Inventor: BORDEAU, Jérôme, F-61110 Le Condeau (FR); COLLIN, Rémi, F-61340 Saint-Hilaire-sur-Erre (FR); PREZELIN, Anthony, F-28400 Nogent-le-Rotrou (FR)
(74) Representative: Mahler, Peter
(86) International application number: PCT/EP2011/001649
(87) International publication number: WO 2011/120711

(56) References cited:
- EP-A2- 0 248 657
- WO-A2-2008/048776
- US-A1- 2002 173 757
- US-A1- 2004 068 238
- US-A1- 2007 227 270
- US-A1- 2007 260 195
- US-A1- 2008 306 469

## Description

The invention relates to the field of medical and/or biological analyses. More precisely, the invention relates to taking a sample of liquid contained in a flexible closed container, for example, a bag for collecting urine or blood.

In order to analyse a liquid of this type, for example, in order to carry out a cytobacteriological urine test, it is first of all necessary to collect a urine sample in such a way that the sample is not contaminated by the collection procedure. When the urine, or more generally, the liquid to be analysed, is contained in a closed collection bag which does not have a drain line allowing simple collection of a sample in the required aseptic conditions, it is theoretically possible to take a sample with a syringe equipped with a needle. After decontaminating an appropriate area of the surface of the bag, e.g. with alcohol swabs, the needle of the syringe is used to pierce through the wall of the bag and to pump out the required quantity of urine.

However, this operating method contains a risk of accidental pricking with the needle of the syringe, a risk which is all the more serious as the urine or blood can be contaminated and thus the needle can contaminate the operator. Furthermore, by puncturing the wall of the bag with the needle of the syringe, it would be easy to go through the second wall of the bag instead of stopping inside the bag to pump out a urine sample, which would not only contaminate the urine sample, but also cause urine leaks.

The object of the invention is to provide medical personnel with a device which allows easy collection of a sample of urine, blood or any other liquid contained in a flexible and closed container, and which is not potentially traumatic, as is the case of the needle of a syringe, and without resorting to complicated and costly material.

A non-traumatic object would be, for example, the nozzle of a syringe without a needle. However, without a needle, the nozzle of a syringe no longer permits piercing of the wall of the container and accessing the liquid which is to be sampled.

The sampling device disclosed in US2007227270 and the needleless access port valve disclosed in US2007260195 represent relevant prior art.

The problem to be resolved relates to piercing the wall of the container with a non-cutting piece, whilst obtaining a precise and clean opening for accessing the liquid and preventing any unintended flow or spill of liquid.

This problem is resolved according to the present invention by a flexible bag for liquid, particularly a urine or blood bag which is characterised in that it contains a device for taking a sample of liquid from said flexible bag. The sampling device comprises a circular opening, arranged so that this opening is accessible from a first side of the device. The device further comprises a support structure on its other side, said support structure comprising at least one support element, whose function is to distribute forces, and which is positioned at a distance from the plane of said opening.

A bag in accordance with the present invention contains a sampling device. The bag can in particular be a urine or blood bag or any other flexible container for liquid. The support structure or the sampling device has preferably the form of a cup. The opening is then provided in the base of the cup and is accessible from underneath. Advantageously, the peripheral wall of the cup can have orifices in order to give the liquid contained in the bag free access to the inside of the sampling device.

In order to take a sample of a liquid, a conical tube of a size adapted to the diameter of the opening of the sampling device can be introduced into the opening from the exterior of the bag. The film of the bag is then squeezed between the edge of the circular opening and the cone, and a sealing effect is therefore obtained. The film is perforated by the extremity of the cone, and samples of liquid can be taken through the cone. To this effect, the base of the cone can be linked to a recipient, e.g. the body of a syringe.

In order to allow sterile sampling without contamination of the sample by the sampling procedure, the bag must preferably be decontaminated from the outside before the cone is positioned, for example, by means of an alcohol swab.

For example, the cone can be the male nozzle of a connector of the Luer type. If the diameter of the opening corresponds to that of the Luer cone, a normalised access is thus obtained, and the sampling can be carried out with any syringe or other device with a Luer connector. No cutting or puncturing piece, such as a needle, for example, is necessary for perforating the film of the bag, which rules out any risk of injuries.

The circular opening of the sampling device can preferably extend into a cone, whose dimensions and shape can correspond to that of a female Luer connector. A secure fastening of a common syringe with a Luer nozzle, for example, is guaranteed in this way. The tightening surface of the film between the two cones is also larger, and the sealing effect is better, due to a superior contact surface.

The opening in the sampling device can also be provided in a sealing ring, which is kept in an appropriate way in the device. Sealing rings of this type are preferably elastic, at least in the region of their opening. A common Luer nozzle, or any other conical nozzle adapted to the size of the opening, can be fixed in the opening in this secure and tight manner.

The film of the bag is perforated during introduction of the conical nozzle, the nozzle being dimensioned in such a way that first of all the sealing effect is established in contact with the edge of the opening, before the film tears in the region of the point of the nozzle due to excessive extension. In order to facilitate and guarantee the perforation of the film, the sampling device can have at least one film perforating element in the region of the axis of the opening on the side opposite to the circular opening. If the nozzle is pushed from the outside of the bag through the opening of the sampling device, the sealing effect is obtained first of all on the edge of the opening. If the nozzle is brought further along the axis of the opening, the film then extends around the point of the nozzle. The stretched film reaches the film perforating element, positioned in the region of the axis, and is perforated there.

The film perforating element can be relatively blunt, as the film is already extended in the region in which it reaches the element and is thus weakened. The film can thus be easily perforated. In the case of a blunt film perforating element, injury to caregivers is ruled out. However, even a cutting or puncturing film perforating element is not dangerous for caregivers, as long as it is provided inside of the sampling device and is not freely accessible from the outside.

The sampling device has a support structure, which is implemented in such a way that a nozzle can be introduced into the opening without damaging the second wall of the bag. The support structure has elements which distribute the forces which are produced during introduction of a nozzle and the perforation of the film, so that damage to the opposing wall of the bag is ruled out.

The elements which distribute forces on the sampling device can preferably be in the form of a ring or a segment of a ring. However, any other form which distributes forces arising during introduction of the exterior nozzle and the perforation of the film, and which avoids force peaks, which are likely to lead to a perforation of the film in another place, is possible.

The sampling device can be introduced into a bag for liquid during production of the latter. In order to prevent the device from floating freely around the inside of the bag, and being in a location which is not perfectly suitable at the moment when sampling should take place, the device can be arranged in a separate compartment of the bag, wherein the communication channel to the main compartment of the bag is too narrow to permit the device to pass through, but large enough to allow free passage of the liquid contained in the bag. This channel can be limited by welds, for example. However, the device can also be fixed within the bag by another means, for example, by being glued or welded, e.g. at least at one point or by a continuous gluing or welding around the opening.

According to a preferred embodiment of the invention the sampling device can be glued or welded to the bag by a continuous gluing or welding around the opening, and the opening comprises valve means to close the opening after perforation of the bag. Such valve means can e.g. be a slit valve which opens when a Luer nozzle is introduced, and closes once the nozzle is removed, a re-sealable membrane, or a flap valve.

The sampling device of a bag for liquid according to the invention can also have an optional second part, which is separate from the first part and placed outside of the bag, and which co-operates with the first part in the bag in such a way that access to the contents of the bag is achieved. For this purpose, the second part has a cone adapted to the opening in the first part. A connection to the inside of the bag can then be created with this cone in the way described above.

In order to obtain sustainable access with a fixed sealing, the second part can be locked with the first part in a position in which access to the bag is established. In this case, the cone of the second part connects in the opening of the first part. The blocking can be obtained in particular by a clamping or snap connection. The two parts of the sampling device are thus connected together in a fixed way, and access to the contents of the bag is guaranteed.

With a view to facilitating the perforation of the film of the bag, the cone of the second part can comprise a film perforating element on the side of its distal extremity, that is to say, in the region of its smaller diameter. Such a film perforating element can protrude from the cone, in particular. When the film is tightened between the first and second part of the sampling device, and the sealing effect is thus obtained, the film is perforated by the film perforating element. The element can only be perforating, and not cutting or puncturing, in order to rule out the risk of injury to operators. The film perforating element can also co-operate with a film perforating element on the first part of the device, in such a way that the perforation occurs in a controlled way, and is not only caused by contact of the film with one of the elements.

The second part of the sampling device can have a female Luer connector on its extremity opposite to the cone. A common syringe or any other device can be connected in this way for taking a sample of liquid. Closure means are preferably provided at this extremity of the second part, in such a way that the device, and therefore the bag, can be closed after taking a sample and thus multiple samples can be taken. Closure means of this type can be, for example, a closing flap or a watertight membrane which can be perforated.

Different embodiments of the invention are subsequently explained in more detail by means of the attached drawings:
- **Figure 1**: shows a preferred embodiment of the sampling device of a bag for liquid according to the invention, in cross section;
- **Figure 2**: shows the embodiment of Figure 1, with access established to the bag of liquid;
- **Figure 3**: shows another embodiment of the sampling device of a bag for liquid according to the invention, in a perspective view;
- **Figure 4**: shows the second part of a sampling device, which can co-operate with the first part according to Figure 3, in a perspective view;
- **Figure 5**: shows the two parts of the sampling device according to Figures 3 and 4, in a side view, before establishing access to the bag of liquid;
- **Figure 6**: shows the sampling device according to Figure 5 after establishing access to the bag of liquid;
- **Figure 7**: shows the device in Figure 6, from a top view;
- **Figure 8**: shows a sampling device which is glued to the bag and comprises a valve means.

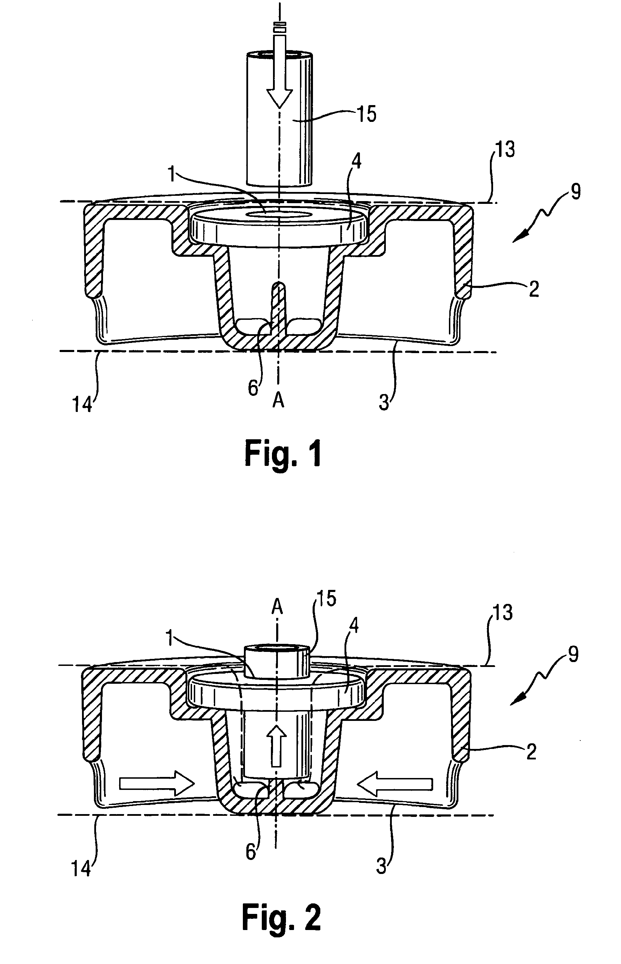

A first embodiment of the bag for liquid with sampling device according to the invention is shown in cross section in **Figure 1****.** The sampling device is made up of a support structure **2** in which an elastic sealing ring **4** is maintained with an opening **1** with an edge. This device is introduced into a bag for liquid, such as, for example, a urine or blood bag, during manufacture of the bag. In order to prevent free movement of the device in the bag, it can be inserted into a small separate compartment of the bag, wherein the communication channel to the main compartment of the bag is too narrow to permit the device to pass through, but large enough to permit free passage of the liquid contained in the bag. However, the device can also be fixedly attached to the wall of the bag, for example, by gluing or welding.

The walls **13, 14** of the bag represented in figure 1 are made of a plastic film and completely surround the device. Access to the bag **13, 14** can thus be obtained with a nozzle in the form of a cone **15,** which does not belong to the device. In the present embodiment, the connector is a male Luer nozzle of a syringe. The diameter of the opening **1** of the sealing ring **4** is adapted accordingly. Liquid can thus be taken from the bag **13, 14** with common standardised means. To this effect, the nozzle **15** is pushed onto the sampling device in the region of the opening **1.**

As can be seen in **Figure 2****,** the film **13** is pushed with the nozzle **15** through the opening of the sealing ring **4.** A sealing effect between the sealing ring, film and nozzle is obtained due to the conical form of the nozzle **15,** and the elasticity of the sealing ring **4.**

The support structure **2** serves in this case for keeping the sealing ring away from the second wall **14** of the bag, in such a way that the nozzle **15** cannot damage the second wall **14** when it is pushed through the opening **1.** The support structure **2** contains support elements **3** which distribute forces. This prevents the second wall **14** of the bag from being damaged by the pressure exerted on the device during introduction of the cone **15** into the opening **1.** The support elements **3** of the present embodiment are in the form of a ring, which prevents force peaks.

The devices also comprises a film perforating element **6,** which is arranged in the region of the axis **A** of the opening **1** on the side of the support elements **3.** There is a pin **6,** which is relatively blunt, and oriented into the direction of the opening **1,** which is certainly perforating, but neither cutting nor puncturing. First of all, the film **13** is tightened between the nozzle **15** and the edge of the opening **1** during penetration of the nozzle **15** in the opening **1** and held before the nozzle **15.** The pin **6** then pierces the strained film, perforates it and thus creates access to the contents of the bag.

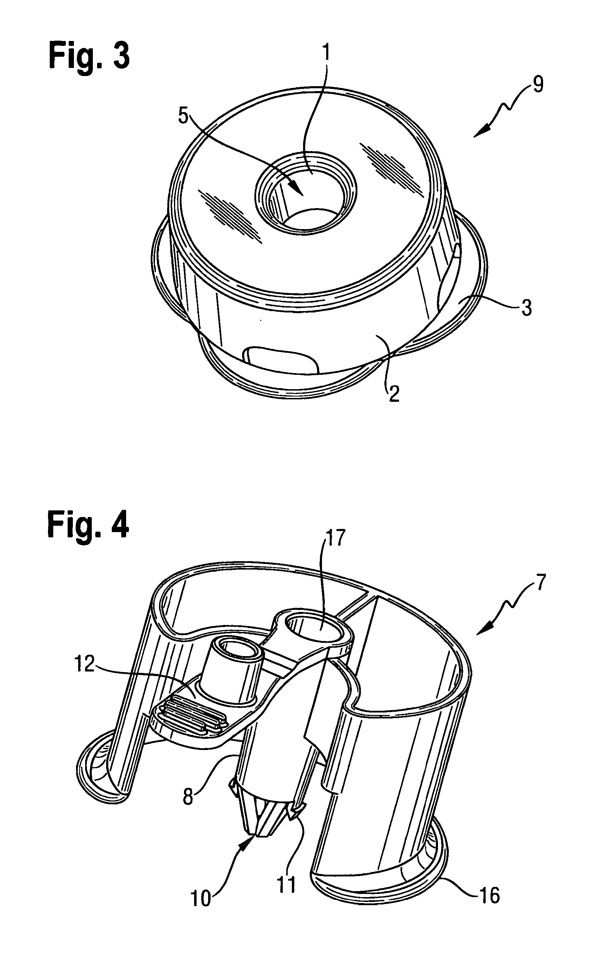

**Figure 3** illustrates another embodiment of a sampling device for a bag according to the invention. In this case, the opening **1** extends into a cone **5.** Sealing over a large area is thus obtained between the sampling device and a nozzle. On the side of the device opposite to the opening, the support structure **2** has extensions as support elements **3,** which guarantee a good distribution of forces and thus protect the film **14** from being damaged.

**Figure 4** illustrates a second optional part **7** of a sampling device according to the invention, which contains a conical nozzle **8** and is positioned on the exterior of the bag on the first part **9** of the device which is situated on the interior of the bag. On its extremity, the conical nozzle **8** contains a film perforating element **10.** The second part **7** of the sampling device has moreover a closing lid **12,** with which the established access can be closed.

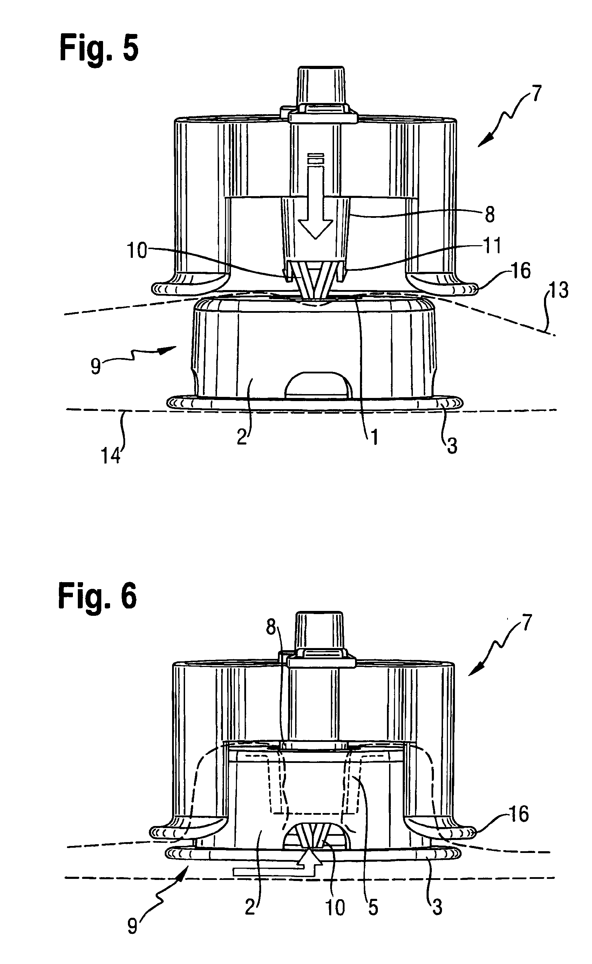

**Figure 5** shows how to position the second part **7** of the sampling device on the first part **9** of the device situated in the bag **13, 14.** The film **13** situated above the first part is in this case pushed into the opening **1** of the first part **9** of the device. So that the pressure exerted on the device does not damage the film **14** situated behind the first part **9** of the device, the first part **9** contains support elements **3** which distribute forces.

It can be seen in **Figure 6** that the film **13** of the bag is wedged tightly in the region of the cones **5, 8,** which are adapted to one another. The film perforating element **10** perforates the film **13** after obtaining the sealing effect, and thus establishes access to the bag. The film perforating elements **10** are in this case neither cutting nor puncturing, so that the caregiver is not put in danger of injury.

The clamping elements **11,** visible in Figure **4****,** establish a clamping connection on the lower edge of the cone **5** of the first part **9** when the parts **7, 9** are completely assembled, and guarantee a secure and durable connection of the two parts **7, 9.** There is no longer a risk of the two parts detaching, and liquid flowing out.

The enlarged edge **16** of the second part **7** of the sampling device prevents damaging the film **13** in this region.

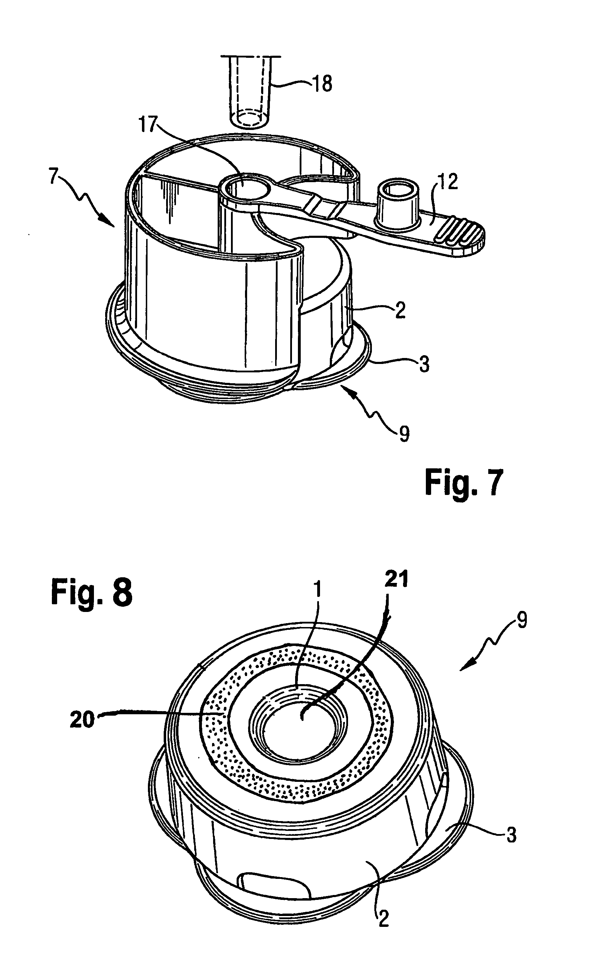

The arrangement of **Figure 6** can be seen in a perspective view in **Figure 7****.** The access opening **17** created can be closed with a lid **12.** The opening **17** is provided for receiving a male Luer nozzle **18** in such a way that a common syringe can be used for taking a sample of liquid, and the device can then be closed with the closure lid **12.** In this way, it is possible to take samples and empty the bag repeatedly.

The sampling device **9** shown in **Figure 8** comprises a continuous bonding surface **20** arranged around the opening **1.** The device **9** is glued with this bonding surface **20** to the inside of the bag. The opening **1** comprises a membrane **21** which opens when a Luer nozzle is introduced into the opening **1,** and closes again once the nozzle is removed. Due to the membrane **21** and the continuous bonding surface **20** the bag remains tight even after the perforation of the film.

## Claims

1. Flexible bag for liquid (13, 14), particularly a urine or blood bag,
wherein the bag contains a device (9) for taking a sample of liquid from said flexible bag, said sampling device (9) comprising
a circular opening (1), which is arranged in said sampling device (9) so that it is accessible from a first side of the device,
and a support structure (2) on the other side of said sampling device (9), which has at least one support element (3), whose function is to distribute forces and which is positioned at a distance from the plane of the opening (1).

2. Bag (13, 14) according to claim 1, **characterised in that** the support structure (2) of said sampling device (9) is in the form of a cup.

3. Bag (13, 14) according to claim 1 or 2, **characterised in that** the edge of the opening (1) of said sampling device (9) has an elastic surface.

4. Bag (13, 14) according to any one of claims 1 to 3, **characterised in that** the opening (1) of said sampling device (9) is arranged in an elastic sealing ring (4) which is maintained in the support structure (2).

5. Bag (13, 14) according to any one of claims 1 to 4, **characterised in that** the opening of said sampling device (9) extends into a cone.

6. Bag (13, 14) according to any one of claims 1 to 5, **characterised in that** said opening and/or said cone of said sampling device (9) are adapted to receive a Luer connector.

7. Bag (13, 14) according to any one of claims 1 to 6, **characterised in that** said sampling device (9) contains at least one film perforating element (6) in the region of the axis (A) of said opening (1) on the side of said support element or elements (3).

8. Bag (13, 14) according to any one of claims 1 to 7, **characterised in that** the elements (3) of said sampling device (9) distributing forces are in the form of a ring or a segment of a ring.

9. Bag (13, 14) according to any one of claims 1 to 8, **characterised in that** the sampling device (9) comprises a second part (7) separate from the first part (9) and placed outside of the bag (13, 14), which has a cone (8) adapted to the opening (1) in the first part (9).

10. Bag (13, 14) according to claim 9, **characterised in that** said cone (8) of the second part (7) of said sampling device (9) has a film perforating element (10) in the region of its smaller diameter.

11. Bag (13, 14) according to claim 9 or 10, **characterised in that** the second part (7) of said sampling device (9) can be blocked on the first part (9) in a position with the cone (8) connected to the opening (1), particularly by a clamping or snap connection (11).

12. Bag (13, 14) according to any one of claims 9 to 11, **characterised in that** the second part (7) of said sampling device (9) has a female Luer connector (17) on the extremity opposing the cone.

13. Bag (13, 14) according to any one of claims 9 to 12, **characterised in that** the second part (7) of said sampling device (9) has a closure means on the extremity opposing the cone (8).

14. Bag (13, 14) according to any one of claims 1 to 13, **characterised in that** the freedom of movement of the first part of said sampling device (9) in the bag is limited, or the first part of said device is glued or welded to the bag at least at one point.

15. Bag (13, 14) according to claim 14, **characterized in that** said first part (9) of said sampling device is glued or welded to the bag (13) around the opening (1).

16. Bag (13, 14) according to claim 15-**characterized in that** the opening (1) comprises valve means (21) to close the opening (1) after perforation of the bag.

## Patentansprüche

1. Flexibler Beutel (13, 14) zur Aufnahme von Flüssigkeiten, insbesondere von Urin oder Blut, der eine Entnahmevorrichtung (9) zur Entnahme einer Flüssigkeitsprobe aus dem Beutel enthält, wobei die Entnahmevorrichtung (9)
eine kreisförmige Öffnung (1), die in der Entnahmevorrichtung (9) derart angeordnet ist, dass sie von einer ersten Seite der Vorrichtung zugänglich ist,
und eine Stützstruktur (2) auf der anderen Seite der Entnahmevorrichtung (9) aufweist, die mindestens ein Stützelement (3) umfasst, das Druckkräfte verteilt, und das beabstandet von der Ebene der Öffnung (1) angeordnet ist.

2. Beutel (13, 14) nach Anspruch 1, **dadurch gekennzeichnet, dass** die Stützstruktur (2) der Entnahmevorrichtung (9) becherförmig ist.

3. Beutel (13, 14) nach Anspruch 1 oder 2, **dadurch gekennzeichnet, dass** der Rand der Öffnung (1) der Entnahmevorrichtung (9) eine elastische Oberfläche aufweist.

4. Beutel (13, 14) nach einem der Ansprüche 1 bis 3, **dadurch gekennzeichnet, dass** die Öffnung (1) der Entnahmevorrichtung (9) in einem elastischen Dichtring (4) angeordnet ist, der in der Stützstruktur (2) gehalten ist.

5. Beutel (13, 14) nach einem der Ansprüche 1 bis 4, **dadurch gekennzeichnet, dass** sich an die Öffnung (1) der Entnahmevorrichtung (9) ein Konus (5) anschließt.

6. Beutel (13, 14) nach einem der Ansprüche 1 bis 5, **dadurch gekennzeichnet, dass** die Öffnung und/oder der Konus der Entnahmevorrichtung (9) für die Aufnahme eines Luer-Verbinders abgestimmt sind.

7. Beutel (13, 14) nach einem der Ansprüche 1 bis 6, **dadurch gekennzeichnet, dass** die Entnahmevorrichtung (9) im Bereich der Achse (A) der Öffnung (1) auf der Seite des oder der Stützelemente (3) mindestens ein folienperforierendes Element (6) aufweist.

8. Beutel (13, 14) nach einem der Ansprüche 1 bis 7, **dadurch gekennzeichnet, dass** die Druckkraft verteilenden Elemente (3) der Entnahmevorrichtung (9) ring- oder ringsegmentförmig sind.

9. Beutel (13, 14) nach einem der Ansprüche 1 bis 8, **dadurch gekennzeichnet, dass** die Entnahmevorrichtung (9) ein zweites Teil (7) umfasst, das getrennt vom ersten Teil (9) und außerhalb des Beutels (13, 14) angeordnet ist, und das einen auf die Öffnung (1) im ersten Teil (9) abgestimmten Konus (8) aufweist.

10. Beutel (13, 14) nach Anspruch 9, **dadurch gekennzeichnet, dass** der Konus (8) des zweiten Teils (7) der Entnahmevorrichtung (9) im Bereich seines kleineren Durchmessers ein folienperforierendes Element (10) aufweist.

11. Beutel (13, 14) nach Anspruch 9 oder 10, **dadurch gekennzeichnet, dass** das zweite Teil (7) der Entnahmevorrichtung (9) am ersten Teil (9) in einer Position mit in der Öffnung (1) steckendem Konus (8) arretierbar ist, insbesondere durch eine Klemm- oder Rastverbindung (11).

12. Beutel (13, 14) nach einem der Ansprüche 9 bis 11, **dadurch gekennzeichnet, dass** das zweite Teil (7) der Entnahmevorrichtung (9) am dem Konus gegenüberliegenden Ende einen weiblichen Luer-Verbinder (17) aufweist.

13. Beutel (13, 14) nach einem der Ansprüche 9 bis 12, **dadurch gekennzeichnet, dass** das zweite Teil (7) der Entnahmevorrichtung (9) einen Verschluss am dem Konus (8) gegenüberliegenden Ende aufweist.

14. Beutel (13, 14) nach einem der Ansprüche 1 bis 13, **dadurch gekennzeichnet, dass** die Bewegungsfreiheit des ersten Teils der Entnahmevorrichtung (9) im Beutel beschränkt ist, oder dass der ersten Teil der Vorrichtung in mindestens in einem Punkt mit dem Beutel verklebt oder verschweißt ist.

15. Beutel (13, 14) nach Anspruch 14, **dadurch gekennzeichnet, dass** der erste Teil (9) der Entnahmevorrichtung mit dem Beutel (13) um die Öffnung (1) verklebt oder verschweißt ist.

16. Beutel (13, 14) nach Anspruch 15, **dadurch gekennzeichnet, dass** die Öffnung (1) eine Ventilanordnung (21) aufweist, um die Öffnung (1) nach der Perforation des Beutels zu verschleißen.

## Revendications

1. Poche de liquide souple (13, 14), notamment poche d'urine ou de sang, la poche contenant un dispositif de prélèvement (9) d'un échantillon de liquide de ladite poche souple, ledit dispositif comprenant
une ouverture circulaire (1), qui est disposée dans le dispositif (9) de telle sorte qu'elle soit accessible d'un premier côté du dispositif,
et une structure d'appui (2) de l'autre côté du dispositif de prélèvement (9) qui présente au moins un élément d'appui (3) qui a pour fonction de répartir des pressions et qui est agencée à distance du plan de l'ouverture (1).

2. Poche (13, 14) selon la revendication 1, **caractérisée en ce que** la structure d'appui (2) du dispositif de prélèvement (9) est en forme de godet.

3. Poche (13, 14) selon les revendications 1 ou 2, **caractérisée en ce que** le bord de l'ouverture (1) du dispositif de prélèvement (9) présente une surface élastique.

4. Poche (13, 14) selon l'une quelconque des revendications 1 à 3, **caractérisée en ce que** l'ouverture (1) du dispositif de prélèvement (9) est disposée dans une bague d'étanchéité élastique (4) qui est maintenue dans la structure d'appui (2).

5. Poche (13, 14) selon l'une quelconque des revendications 1 à 4, **caractérisée en ce que** l'ouverture du dispositif de prélèvement (9) se prolonge en un cône.

6. Poche (13, 14) selon l'une quelconque des revendications 1 à 5, **caractérisée en ce que** l'ouverture et/ou le cône du dispositif de prélèvement (9) sont adaptés pour recevoir un embout du type Luer.

7. Poche (13, 14) selon l'une quelconque des revendications 1 à 6, **caractérisée en ce que** le dispositif de prélèvement (9) présente au moins un élément de perforation de film (6)'dans la région de l'axe (A) de l'ouverture (1) du côté du ou des éléments d'appui (3).

8. Poche (13, 14) selon l'une quelconque des revendications 1 à 7, **caractérisée en ce que** les éléments du dispositif de prélèvement (9) répartissant une pression (3) sont en forme d'anneau ou de segment d'anneau.

9. Poche (13, 14) selon l'une quelconque des revendications 1 à 8, **caractérisée en ce que** le dispositif de prélèvement (9) comprend une seconde partie (7), séparée de la première partie et située à l'extérieur de la poche, qui présente un cône (8) adapté à l'ouverture (1) dans la première partie (9).

10. Poche (13, 14) selon la revendication 9, **caractérisée en ce que** le cône (8) de la seconde partie (7) du dispositif de prélèvement (9) présente un élément de perforation de film (10) dans la région de son diamètre inférieur.

11. Poche (13, 14) selon les revendications 9 ou 10, **caractérisée en ce que** la seconde partie (7) du dispositif de prélèvement (9) peut être bloquée sur la première partie (9) dans une position avec le cône (8) connecté dans l'ouverture (1), notamment par une connexion par serrage ou encliquetage (11).

12. Poche (13, 14) selon l'une quelconque des revendications 9 à 11, **caractérisée en ce que** la seconde partie (7) du dispositif de prélèvement (9) présente un connecteur Luer femelle (17) à l'extrémité opposée au cône.

13. Poche (13, 14) selon l'une quelconque des revendications 9 à 12, **caractérisée en ce que** la seconde partie (7) du dispositif de prélèvement (9) présente une fermeture à l'extrémité opposée au cône (8).

14. Poche de liquide (13, 14) selon l'une quelconque des revendications 1 à 13, **caractérisée en ce que** la liberté de déplacement de la première partie du dispositif de prélèvement (9) dans la poche est limitée ou la première partie du dispositif de prélèvement est collé ou soudé au moins en un point avec la poche.

15. Poche de liquide (13, 14) selon la revendication 14, **caractérisée en ce que** la première partie (9) du dispositif de prélèvement est collé ou soudé avec la poche (13) autour de l'ouverture (1).

16. Poche de liquide (13, 14) selon la revendication 15, **caractérisée en ce que** l'ouverture (1) comprend des moyens de soupape (21) pour fermer l'ouverture (1) après la perforation de la poche.
